# EUROPEAN PATENT APPLICATION

(11) **EP 4 123 551 A1**
(43) Date of publication of application: **25.01.2023**
(21) Application number: 22181408.0
(22) Date of filing: 28.06.2022
(51) Int. Cl.: G06Q 30/06, B60L 58/10, G06Q 50/30

(54) **AN ELECTRIC BATTERY AND VEHICLE RENTAL SYSTEM**

(30) Priority: 19.07.2021 JP 2021118413
(71) Applicant: TOYOTA JIDOSHA KABUSHIKI KAISHA, Toyota-shi, Aichi-ken, 471-8571 (JP)
(72) Inventor: OKUCHI, Hiroaki, TOYOTA-SHI, AICHI-KEN, 471-8571 (JP)
(74) Representative: Cabinet Beau de Loménie

(57) **Abstract**

A proposal system (1) includes a processor. The processor is configured to propose to a user (6; 6A) of a battery electric vehicle (7; 7A) a rental vehicle (8) the user is able to use during charging of an energy storage device mounted on the battery electric vehicle in order to allow the user to use the battery electric vehicle in a charged state in which the energy storage device has been charged.

## Description

### 1. Field of the Invention

The present invention relates to proposal systems.

### 2. Description of Related Art

In recent years, battery electric vehicles that run on power from an energy storage device have attracted attention due to growing environmental concerns. However, the battery electric vehicles can no longer run when the power in the energy storage device runs out.

For example, a management device described in Japanese Unexamined Patent Application Publication No. 2015-87799 (JP 2015-87799 A) selects battery electric vehicles whose state of charge (SOC) is high enough for a trip from a first point to a second point. The first and second points are points on a route from a departure point to an arrival point. The first point is a point other than the arrival point, and the second point is a point that is located closer to the arrival point than the first point and that is to be reached after the first point. The management device performs a selection procedure of selecting battery electric vehicles from a group of battery electric vehicles located at the first point, a setting procedure of setting the recommendation level of each battery electric vehicle selected by the selecting procedure based on how low the SOC of the battery electric vehicle is, and an output procedure of outputting the recommendation levels set by the setting procedure.

### SUMMARY OF THE INVENTION

A user typically needs to charge an energy storage device of a battery electric vehicle when the SOC of the battery electric vehicle becomes low. Since it takes time to charge the energy storage device, there are users who desire to make good use of the charging time.

The present disclosure provides a system that allows a user of a battery electric vehicle to make good use of the charging time of the battery electric vehicle.

An aspect of the present disclosure relates to a proposal system. The proposal system includes a processor. The processor is configured to propose, to a user of a battery electric vehicle, a rental vehicle the user is able to use during charging of an energy storage device mounted on the battery electric vehicle in order to allow the user to use the battery electric vehicle in a charged state in which the energy storage device has been charged.

In the above aspect, the processor may be configured to propose the rental vehicle based on information on a point to which the user is going during the charging. The processor may be configured to propose the rental vehicle based on user-related information on the user.

In the above aspect, the battery electric vehicle may be a vehicle the user is able to use in a vehicle usage service that is available in exchange for a payment of a predetermined fee. The user-related information may include contract information of the user in the vehicle usage service. The processor may be configured to propose the rental vehicle to the user based on the contract information of the user.

In the above aspect, the rental vehicle may include a plurality of vehicles of different grades. Contract information of the user may include rental grade information that defines a grade range of a vehicle to be rented to the user. The processor may be configured to propose the rental vehicle to the user based on the rental grade information.

The proposal system may further include a charging equipment. The charging equipment may include a normal charging unit that charges the energy storage device with first charging power and a fast charging unit that charges the energy storage device with second charging power higher than the first charging power. The proposal system may further include a user interface configured to be operated by the user. The processor may be configured to propose the normal charging unit or the fast charging unit as a charging unit that charges the battery electric vehicle, based on input information entered to the user interface by the user.

In the above aspect, the input information may include model information of the battery electric vehicle, a state of charge of the energy storage device, information on a point to which the user is going during the charging, and user-related information on the user. The processor may be configured to set a charging fee for charging the energy storage device using the charging equipment. The processor may be configured to calculate the charging fee in such a way that a charging fee for charging with the fast charging unit is higher than a charging fee for charging with the normal charging unit.

In the above aspect, the energy storage device may be charged at least in a period during which the user uses the rental vehicle. The charged state may be a state in which a state of charge of the energy storage device is a predetermined value or more. The user interface may be a mobile terminal. The processor may be mounted on a server configured to communicate with the mobile terminal.

According to the proposal system of the present disclosure, the user of the battery electric vehicle can make good use of the charging time of the battery electric vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram of a proposal system 1 according to an embodiment;
FIG. 2 is a schematic block diagram of a battery electric vehicle 7;
FIG. 3 is a front view of a user terminal 15;
FIG. 4 is a flowchart showing a flow until a user uses the battery electric vehicle 7 by using a vehicle subscription service provided by a service provider 9;
FIG. 5 is a flowchart of a process that is performed when a user 6, 6A uses a service to provide rental vehicles;
FIG. 6 is a flowchart of the step of producing a response signal by a server 2;
FIG. 7 is a flowchart of a fee setting process;
FIG. 8 is a graph schematically showing a first fee model; and
FIG. 9 is a graph schematically showing a second fee model.

### DETAILED DESCRIPTION OF EMBODIMENTS

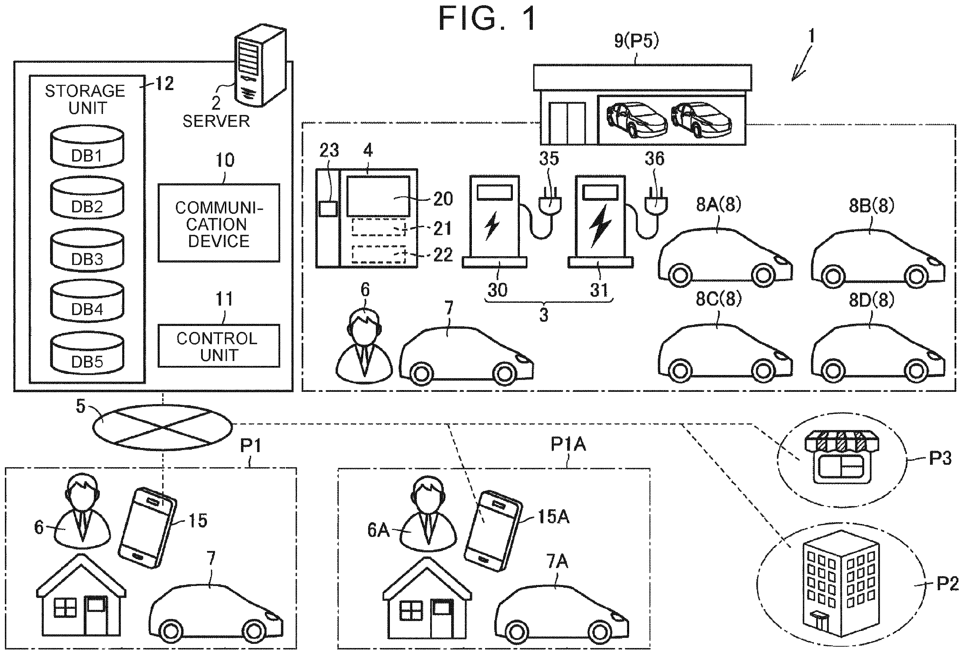

A proposal system 1 according to an embodiment will be described with reference to FIGS. 1 to 9. The same or corresponding configurations are denoted with the same signs throughout FIGS. 1 to 9, and description thereof will not be repeated.

FIG. 1 schematically shows the proposal system 1 according to the embodiment. A service provider 9 provides a vehicle subscription service. The service provider 9 provides a battery electric vehicle 7 a user 6 can use to the user 6 in exchange for receiving a payment of a fixed fee from the user 6.

The service provider 9 also provides a service to provide rental vehicles (hereinafter also referred to as "rental vehicle providing service"). Specifically, the service provider 9 uses the proposal system 1 to charge the battery electric vehicle 7 of the user 6 and rent to the user 6 a rental vehicle 8 the user 6 can use while charging the battery electric vehicle 7. By using the rental vehicle providing service of the service provider 9, the user 6 can use the rental vehicle 8 to run errands etc. When the user 6 returns the rental vehicle 8, the user 6 can pick up the battery electric vehicle 7 that has finished charging, so that the user 6 can use the charged battery electric vehicle 7.

The user 6 is a user of the vehicle subscription service of the service provider 9. Although a user 6A is not a user of the vehicle subscription service of the service provider 9, the user 6A can also use the rental vehicle providing service of the service provider 9.

The service provider 9 prepares a plurality of rental vehicles 8 to rent to the users 6, 6A. In the example shown in FIG. 1, the service provider 9 prepares rental vehicles 8A to 8D.

The proposal system 1 includes a server (proposal device) 2, charging equipment 3, and a receiving terminal 4. In the example shown in FIG. 1, the charging equipment 3 includes a normal charging unit 30 and a fast charging unit 31. The normal charging unit 30 includes a charging plug 35, and the fast charging unit 31 includes a charging plug 36.

The receiving terminal 4 includes a display unit 20, a control unit 21, a communication device 22, and a key pickup unit 23. The control unit 21 controls driving of the display unit 20, the communication device 22, and the key pickup unit 23. The display unit 20 can display various kinds of information to be notified to the user 6. The user 6 can enter various kinds of information to an input form displayed on the display unit 20. Since the user 6 can enter various kinds of information via a display screen of the display unit 20, the display unit 20 is an example of a user interface. The communication device 22 is configured to communicate with the server 2, the charging equipment 3, and the rental vehicles 8.

The key pickup unit 23 is a device from which the user 6 picks up a vehicle key of the rental vehicle 8 to be picked up by the user 6 according to a command from the control unit 21.

The server 2 includes a communication device 10, a control unit 11, and a storage unit 12. The communication device 10 is configured to communicate with a user terminal 15 of the user 6 through the Internet 5.

The control unit 11 includes a processor that performs various arithmetic operations etc. The storage unit 12 stores various databases.

The storage unit 12 stores a user information database DB1, a rental vehicle database DB2, a charging equipment database DB3, and a surroundings information database DB4. The storage unit 12 may also store another database DB5 if it is needed.

Table 1 schematically shows the rental vehicle database DB2.

**Table 1**

| Rental Vehicle Database DB2 (Rental Vehicle Information LCD) | | |
|---|---|---|
| Vehicle ID | Grade information RD | Grade a |
| | Rental period information LTD | |
| | Rental user information LUD | |
| | Feature information FVD | |
| Vehicle ID | Grade information RD | Grade b |
| | Rental period information LTD | |
| | Rental user information LUD | |
| | Feature Information FVD | |
| Vehicle ID | Grade information RD | Grade c |
| | Rental period information LTD | |
| | Rental user information LUD | |
| | Feature information FVD | |
| Vehicle ID | Grade information RD | Grade d |
| | Rental period information LTD | |
| | Rental user information LUD | |
| | Feature information FVD | |

The rental vehicle database DB2 stores rental vehicle information LCD of each rental vehicle 8 (8A to 8D).

The rental vehicle information LCD includes a vehicle identification (ID) identifying the rental vehicle 8, grade information RD indicating the grade of the rental vehicle 8, rental period information LTD, and rental user information LUD.

The grade information RD is information indicating the grade of the rental vehicle 8. The rental vehicles 8 are classified into, for example, Grade a, Grade b, Grade c, and Grade d with Grade a being the highest. The grades are basically set so that the more luxury the vehicle is, the higher the grade. Convenient vehicles that do not need to be parked in a parking lot, such as "TOYOTA i-ROAD," are also classified as high grade vehicles.

The rental period information LTD stores a rental period when the rental vehicle 8 is rented.

The rental user information LUD stores information identifying the user renting the rental vehicle 8 when the rental vehicle 8 is rented.

The feature information FVD is information indicating various features FV of the rental vehicle 8. Examples of the features FV include trunk volume, quietness, ease of getting into and out of the rental vehicle 8, maximum torque, and seating capacity.

Table 2 schematically shows the user information database DB1.

**Table 2**

| User Information Database DB 1 | | | |
|---|---|---|---|
| User information UD1 | Contract information C1 | Contract period information D1 | |
| | | Fee information D2 | |
| | | Membership level information D3 | First level |
| | | Vehicle information D4 | |
| | | Vehicle grade information D5 | Grade A |
| | | Rental information D6 | a, b, c, d |
| | | Option information D7 | Option OP1 |
| | User-specific information P1 | User ID | |
| | | User password UPW | |
| | | Home location information | |
| User information UD2 | Contract information C1 | Contract period information D1 | |
| | | Fee information D2 | |
| | | Membership level information D3 | Second level |
| | | Vehicle information D4 | |
| | | Vehicle grade information D5 | Grade C |
| | | Rental information D6 | c, d |
| | | Option information D7 | Option OP2 |
| | User-specific information P1 | User ID | |
| | | User password UPW | |
| | | Home location information | |

The user information database DB1 includes a plurality of pieces of user information UD. In the example shown in Table 2, the user information database DB1 includes user information UD1 and user information UD2. For example, the user information UD1 is user information of the user 6.

The user information UD includes a user ID identifying the user 6, contract information CI, and user-specific information PI.

The contract information CI is contract information of the vehicle subscription service. The contract information CI includes contract period information D1, fee information D2, membership level information D3, vehicle information D4, vehicle grade information D5, rental information D6, and option information D7.

The contract period information D1 is information indicating a period during which the user 6 can use the battery electric vehicle 7.

The fee information D2 is a fixed fee to be paid monthly from the user 6 to the service provider 9. The user 6 can use the battery electric vehicle 7 in exchange for the payment of the fixed fee, and does not need to pay any other fees such as taxes, insurance, maintenance fees.

The membership level information D3 is information indicating the membership level of the user 6. The membership is classified into a plurality of levels such as first to fifth levels with the first level being the highest. For example, the membership levels are set so that the longer the user has been using the vehicle subscription service, the higher the membership level.

The vehicle information D4 is information identifying the battery electric vehicle 7 being used by the user 6. The vehicle grade information D5 is information indicating the grade of the battery electric vehicle 7 being used by the user 6. For example, the battery electric vehicles 7 are classified into Grade A, Grade B, Grade C, and Grade D with Grade A being the highest.

The rental information D6 stores the grade range of the rental vehicle 8 to be provided to the user 6. For example, when "a, b, c, d" is stored in the rental information D6, it indicates that this user 6 can rent any of the rental vehicles 8 of Grades a to d. When "d" is stored in the rental information D6, it indicates that this user 6 can rent any of the rental vehicles 8 of Grade d.

The option information D7 stores information on a special contract selected by the user 6 at the time of contracting the vehicle subscription service.

For example, option OP1 or option OP2 is stored in the option information D7. Option OP1 is a flag indicating that any of the rental vehicles 8 in a grade range larger than the grade range stored in the rental information D6 is to be rented to the user 6. For example, even when "d" is stored in the rental information D6, any of the rental vehicles 8 of Grades c and d is to be rented to the user 6 if option OP1 is stored in the option information D7.

On the other hand, option OP2 is a flag indicating that any of the rental vehicles 8 in a grade range smaller than the grade range stored in the rental information D6 is to be rented to the user 6. For example, even when "a, b, c, d" is stored in the rental information D6, any of the rental vehicles 8 of Grade d is to be rented to the user 6 if option OP2 is stored in the option information D7.

The user-specific information PI includes information indicating a user ID, information indicating a user password UPW, and location information of the user 6's house.

Table 3 schematically shows the charging equipment database DB3. The charging equipment database DB3 stores information on the normal charging unit 30 and the fast charging unit 31.

**Table 3**

| Charging Equipment Database DB3 | | |
|---|---|---|
| Charging unit information CD(0) | Charging power upper limit information D10 | 30 kW |
| | Available time information D11 | |
| Charging unit information CD(1) | Charging power upper limit information D10 | 100 kW |
| | Available time information D11 | |

The charging unit information CD(0) stores information on the normal charging unit 30, and the charging unit information CD(1) stores information on the fast charging unit 31. The charging unit information CD includes charging power upper limit information D10 and available time information D11.

The charging power upper limit information D10 indicates an upper limit of the power that can be output from the charging unit. For example, "30 kW" is stored in the charging power upper limit information D10 of the charging unit information CD(0), and "100 kW" is stored in the charging power upper limit information D10 of the charging unit information CD(1).

The surroundings information database DB 4 is a database indicating facilities located around the service provider 9 such as supermarkets, train stations, parking lots, and schools, location information of each facility, and features of each facility. Table 4 shows a part of the surroundings information database DB4.

**Table 4**

| Surroundings Information Database DB4 | | | | |
|---|---|---|---|---|
| Facility Name | Location Information | Feature FV 1 | Feature FV2 | Feature FV3 |
| Supermarket A | ○○ | 1 | 0 | 0 |
| Home Improvement Store B | ○Δ | 5 | 0 | 0 |
| School C | Δ○ | 0 | 2 | 0 |
| Hospital D | ΔΔ | 0 | 2 | 3 |

For example, the feature FV1 indicates the level of necessity for trunk volume. The feature FV2 indicates the level of necessity for quietness. The feature FV3 indicates the level of necessity for ease of getting into and out of the rental vehicle 8. Other features may include features related to the maximum torque and features related to the seating capacity.

For example, in Table 4, Home improvement store B sells materials etc. and it is highly likely that the rental vehicle 8 may be loaded with large materials when leaving the store. The feature FV1 therefore has a large value. Since it is highly likely that an injured or sick person may get into or out of the rental vehicle 8 at Hospital D, the feature FV3 has a large value.

For example, when it is necessary to drive up a steep hill on a route from the position of the service provider 9 to Supermarket A, the feature regarding the maximum torque for Supermarket A is set to a large value.

The server 2 may be configured to communicate with a server of each store such as Supermarket A and Home improvement store B and to collect information of each store. In this case, for example, when the server 2 obtains information such as special sales of furniture at Home improvement store B, the feature FV1 for Home improvement store B may be temporarily increased based on this information.

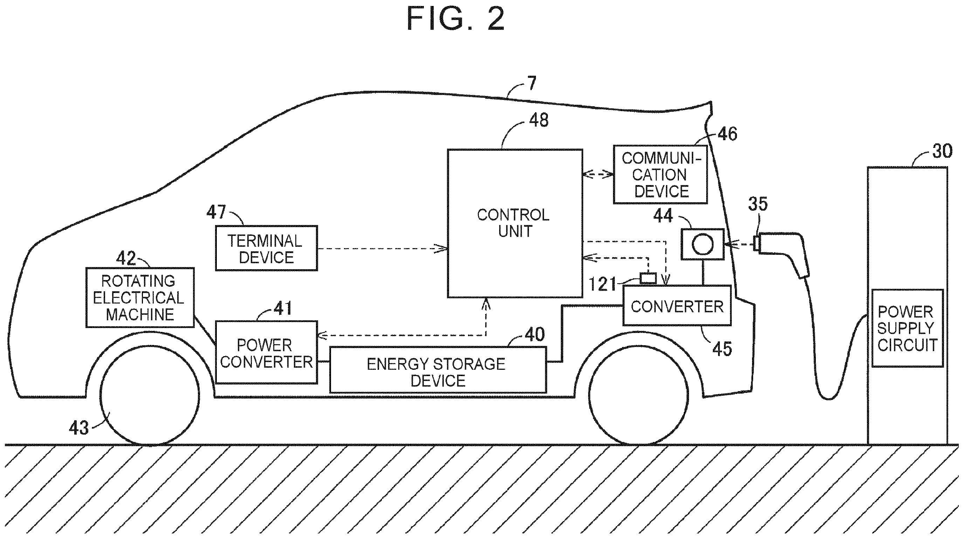

FIG. 2 is a schematic block diagram of the battery electric vehicle 7. The battery electric vehicle 7 includes an energy storage device 40, a power converter 41, a rotating electrical machine 42, a drive wheel 43, an inlet unit 44, a converter 45, a communication device 46, a terminal device 47, and a control unit 48. The energy storage device 40 is a secondary battery such as lithium-ion battery. The power converter 41 converts direct current (DC) power output from the energy storage device 40 to alternating current (AC) power, and supplies the AC power to the rotating electrical machine 42. The rotating electrical machine 42 is driven by the supplied AC power to rotate the drive wheel 43.

The charging plugs 35, 36 can be connected to the inlet unit 44. The converter 45 converts power supplied through the inlet unit 44 to charge the energy storage device 40.

The control unit 48 controls driving of the power converter 41, the converter 45, the communication device 46, and the terminal device 47. The communication device 46 is configured to communicate with the proposal system 1 and the user terminal 15 through the Internet 5.

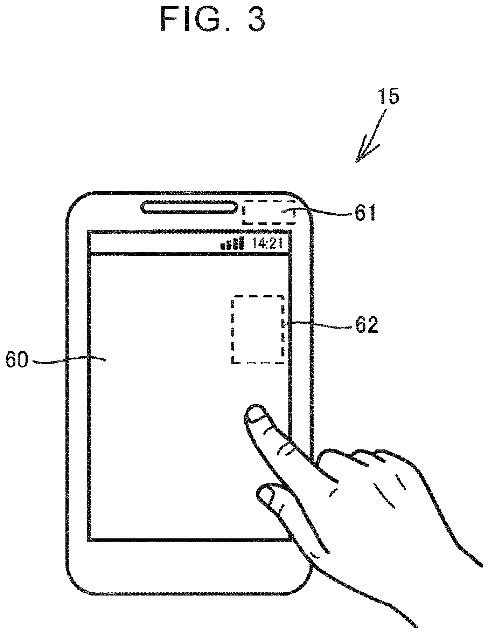

FIG. 3 is a front view of the user terminal 15. The user terminal 15 includes a display unit 60, a communication device 61, and a control unit 62. The user terminal 15 is, for example, a smartphone used by the user 6. The control unit 62 controls driving of the display unit 60 and the communication device 61.

The display unit 60 can display various kinds of information to be notified to the user 6. The user 6 can enter various kinds of information by operating the display unit 60.

The communication device 61 is configured to communicate with the server 2, so that the communication device 61 can send and receive various kinds of information to and from the server 2.

For example, the communication device 61 can access the server 2 to access a web page of the service provider 9, and the display unit 60 can display the web page of the service provider 9. The user 6 can enter various kinds of information to a form displayed on the display unit 60. The communication device 61 sends various kinds of information entered to the form by the user 6 to the server 2.

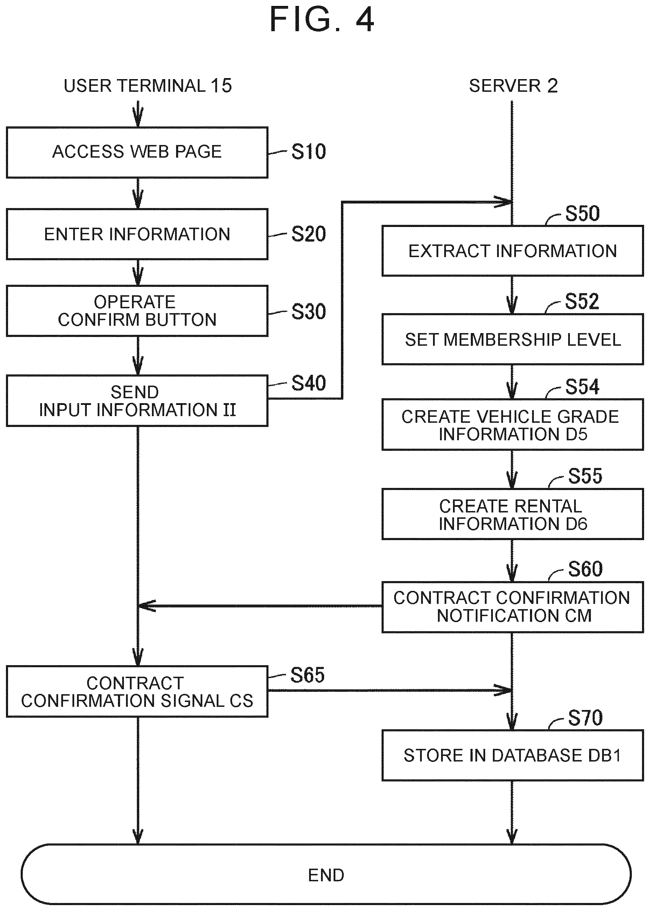

FIG. 4 is a flowchart showing a flow until the user 6 uses the battery electric vehicle 7 by using the vehicle subscription service provided by the service provider 9.

The user 6 accesses the web page of the service provider 9 via the user terminal 15 (S10).

The user 6 enters various kinds of information to an input form displayed on the display unit 60 (S20). Specifically, the user 6 enters the vehicle the user 6 wants to use, usage period, usage start time, option details, user information of the user 6, and service providing store where the user 6 picks up the vehicle. The user information includes information such as the address of the user 6.

The option details are the details on option OP1 or OP2 for using a rental vehicle 8.

Information such as fixed fee to be paid monthly by the user 6 and payment period is displayed on the input form, based on the vehicle the user 6 wants to use and the usage period.

When the user 6 finishes entering the input form, the user 6 presses a confirm button displayed on the display unit 60 (S30). When the confirm button is pressed, the user terminal 15 sends input information II entered by the user 6 to the server 2 (S40).

When the server 2 receives the input information II, the server 2 extracts contract period information D1, fee information D2, vehicle information D4, and option information D7 based on the input information II (S50).

The server 2 sets the membership level (S52). Specifically, the control unit 11 determines whether there is a past contract history, based on the user information included in the input information II and the user information database DB1. The control unit 11 sets the membership level of the user 6 based on the sum of the contract period in the input information II and the past contract period(s). The longer the total contract period, the higher the membership level.

The control unit 11 creates vehicle grade information D5 (S54). The storage unit 12 stores a map that associates vehicles with vehicle grades, and the control unit 11 creates the vehicle grade information D5 from the map and the vehicle information D4.

The control unit 11 creates rental information D6 (S55). The storage unit 12 stores a map for setting the rental information D6 from the membership level information D3 and the vehicle grade information D5, and the control unit 11 creates the rental information D6 from the map, the membership level information D3, and the vehicle grade information D5.

The control unit 11 thus creates contract information CI including the contract period information D1, the fee information D2, the membership level information D3, the vehicle information D4, the vehicle grade information D5, the rental information D6, and the option information D7.

The control unit 11 sends a contract confirmation notification CM to the user terminal 15 (S60). The contract confirmation notification CM includes the contract information CI and information indicating the user ID.

When the user 6 sets a user password UPW in a setting form included in the contract confirmation notification CM and presses a confirm button, the server 2 receives a contract confirmation signal CS (S65).

The contract between the user 6 and the service provider 9 is thus finalized. The user 6 goes to the selected service providing store to pick up the battery electric vehicle 7. The user 6 can thus use the battery electric vehicle 7 during the contract period.

When the server 2 receives the contract confirmation signal CS, the server 2 stores the contract information CI and the user password UPW in the user information database DB1 in the storage unit 12 (S70).

In this way, the user 6 can use the battery electric vehicle 7 by the vehicle subscription service provided by the service provider 9.

In FIG. 1, there are cases where the user 6 is going from a departure point P1 to a destination point P2 but the SOC of the energy storage device 40 of the battery electric vehicle 7 is low and the battery electric vehicle 7 needs to be charged.

In such cases, the user 6 can use the rental vehicle providing service of the service provider 9. Similarly, there are also cases where the user 6A is going from a departure point P1A to the destination point P2 but the battery electric vehicle 7A needs to be charged.

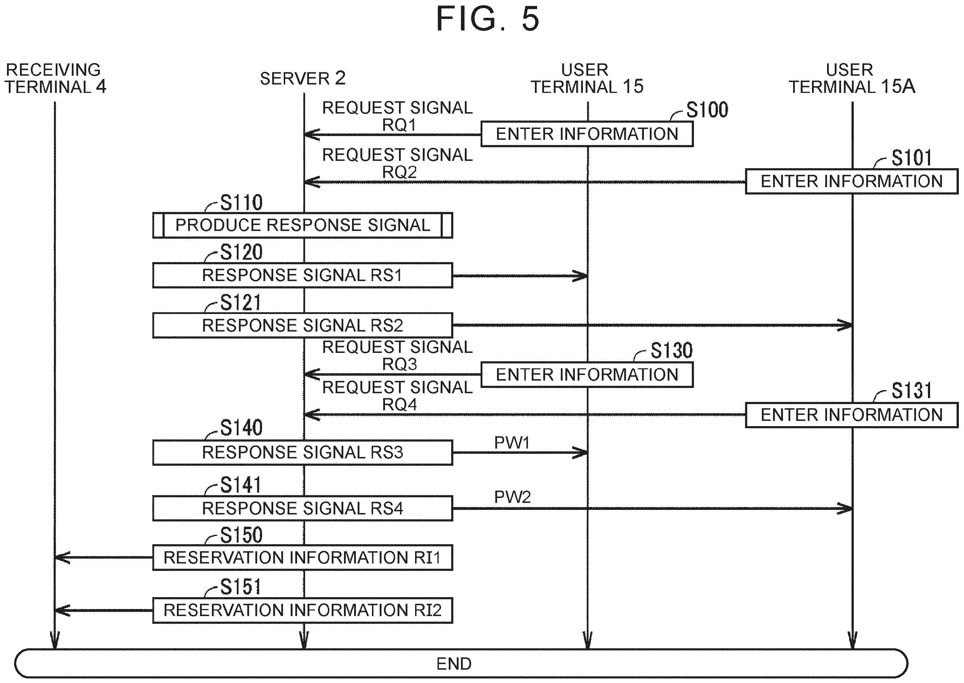

FIG. 5 is a flowchart of a process that is performed when the user 6, 6A uses the rental vehicle providing service.

The user 6 accesses a website of the service provider 9 and enters various kinds of information using the user terminal 15 (S100). Specifically, the user 6 enters information on the rental vehicle providing service, information on charging, and information indicating that the user 6 is a user of the vehicle subscription service to an input form on the website, and presses a confirm button.

The information on the rental vehicle providing service includes information indicating that the user 6 wants to use the rental vehicle providing service, arrival time at a store point P5, rental vehicle usage time, and a destination to which the user 6 is going with a rental vehicle. The rental vehicle usage time includes rental start time and rental return time.

The information on charging includes information on whether the user 6 wants to charge his or her vehicle, a desired charging method, model information of the vehicle to be charged, and information on whether the user 6 is the owner of the vehicle to be charged.

Entering a destination to which the user 6 is going with a rental vehicle may be optional. The information indicating that the user 6 is a user of the vehicle subscription service includes his or her user ID and a user password UPW. The desired charging method indicates either fast charging or normal charging.

The user 6A accesses the website of the service provider 9 and enters various kinds of information using a user terminal 15A (S101). The user 6A is not a user of the vehicle subscription service. Therefore, the user 6A enters information on the rental vehicle providing service and information on charging to an input form on the website, and presses a confirm button.

The server 2 receives a request signal RQ1 regarding the user 6. Similarly, the server 2 receives a request signal RQ2 regarding the user 6A. The request signals RQ1, RQ2 include the input information entered by the users 6, 6A, respectively.

When the server 2 receives the request signal RQ1, RQ2, the server 2 produces a response signal (S110).

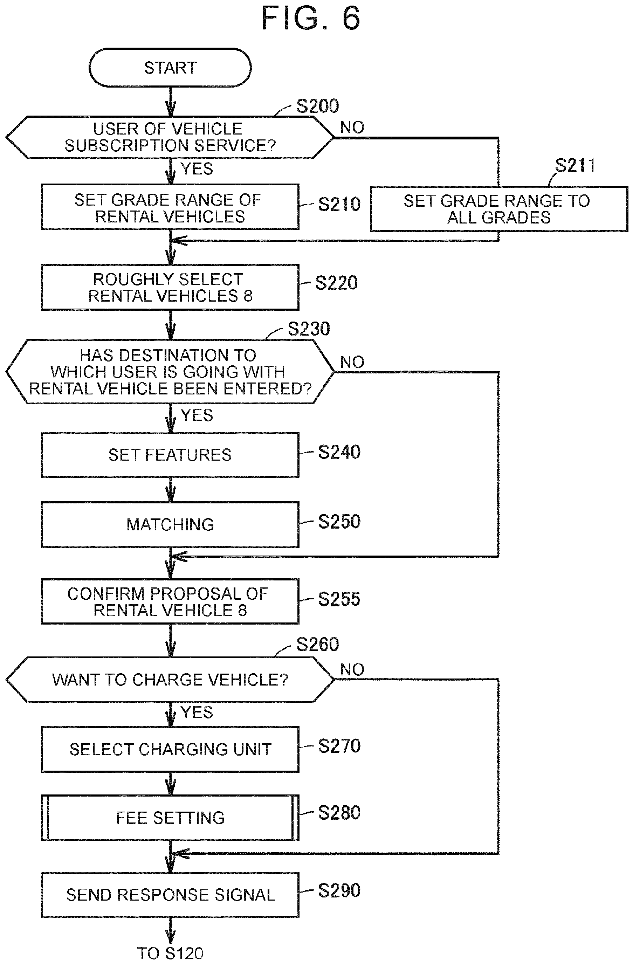

FIG. 6 is a flowchart of the step of producing the response signal by the server 2.
The control unit 11 of the server 2 determines whether the sender of the request signal RQ1, RQ2 is a user of the vehicle subscription service (S200).

When the control unit 11 determines that the user is a user of the vehicle subscription service (Yes in S200), the control unit 11 sets the grade range of the rental vehicles 8 (S210).

Specifically, the server 2 sets the grade range of the rental vehicles 8 that can be selected, based on the rental information D6 and the option information D7 in the user information database DB1.

When the server 2 determines that the sender of the request signal RQ1, RQ2 is not a user of the vehicle subscription service (No in S200), the server 2 sets the grade range of the rental vehicles 8 to the range including all the grades (S211).

The server 2 roughly selects rental vehicles 8 (S220). Specifically, the server 2 first extracts rental vehicles 8 in the set grade range from the rental vehicle database DB2 (rental vehicle information LCD).

The server 2 then extracts available rental vehicles 8 based on the information on the rental vehicle usage time included in the request signal RQ1, RQ2 and the rental user information LUD of each of the extracted rental vehicles 8. The server 2 thus completes rough selection of rental vehicles 8.

When the server 2 completes the rough selection of rental vehicles 8, the server 2 determines whether a destination to which the user is going with a rental vehicle has been entered (S230).

When the server 2 determines that a destination to which the user is going with a rental vehicle has been entered (Yes in S230), the server 2 sets features based on the destination (S240). When the server 2 determines that a destination to which the user is going with a rental vehicle has not been entered (No in S230), the routine proceeds to S255 that will be described later.

Specifically, when a destination to which the user is going with a rental vehicle is a facility or near a facility, the server 2 extracts the features FV1 to FV3 of the facility from the surroundings information database DB4.

The server 2 matches the requested features against the features of the rental vehicles 8 (S250). Specifically, the server 2 extracts rental vehicles 8 satisfying the requested features FV1 to FV3, based on the feature information FVD of each of the rental vehicles 8 roughly selected in S220 and the requested features FV1 to FV3. Matching is performed in this manner. The server 2 then confirms the rental vehicles 8 to be proposed to the user (S255).

The server 2 determines whether the user wants to charge a vehicle (S260). Specifically, the server 2 makes this determination based on the input information on charging included in the request signals RQ1, RQ2.

When the server 2 determines that the user wants to charge a vehicle (Yes in S260), the server 2 selects a charging unit (S270). Specifically, the server 2 selects either the normal charging unit 30 or the fast charging unit 31 the user can use, based on the input information on "desired charging method" and "return time of the rental vehicle 8" included in the request signal RQ1, RQ2, and the charging power upper limit information D10 and the available time information D11 in the charging equipment database DB3. The server 2 also confirms the usage time of the selected charging unit. The end time of the usage time is set to before the return time of the rental vehicle 8.

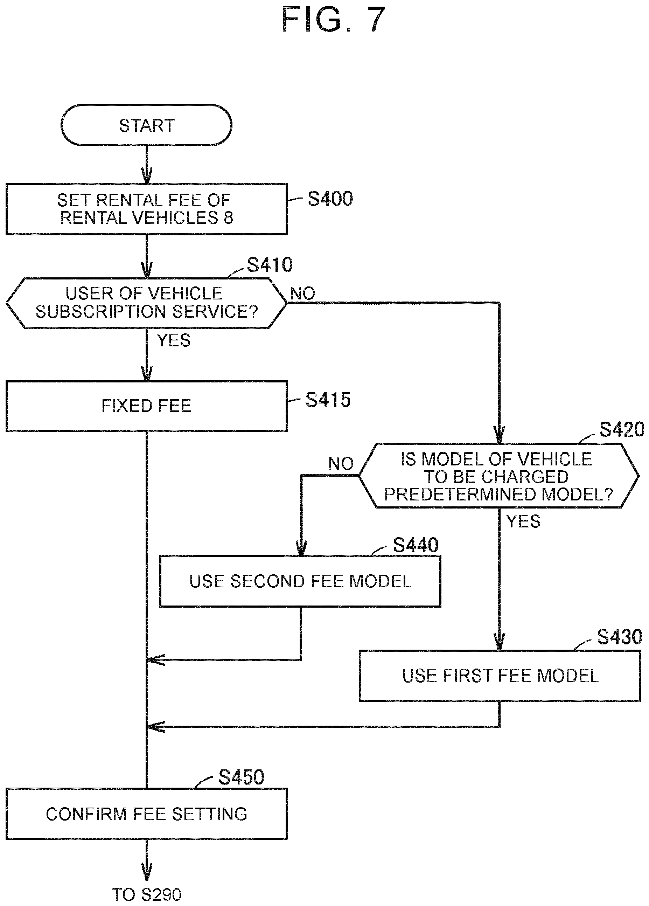

The server 2 performs fee setting (S280). FIG. 7 is a flowchart of the fee setting. The server 2 sets the rental fee of the rental vehicles 8 (S400).

When the user is a user of the vehicle subscription service, the server 2 sets the rental fee to, for example, zero or a small amount.

When the user is not a user of the vehicle subscription service, the server 2 sets the rental fee for each rental vehicle 8 to be proposed to the user, based on the rental vehicles 8 to be proposed to the user that have been confirmed in S255 and the rental vehicle usage time.

The server 2 sets a charging fee. Specifically, the server 2 first determines whether the user is a user of the vehicle subscription service (S410).

When the user is a user of the vehicle subscription service (Yes in S410), the server sets the charging fee to a fixed amount (S415). The fixed fee is a small amount or zero.

When the user is not a user of the vehicle subscription service (No in S410), the server 2 determines whether the model of the vehicle to be charged is a predetermined model (S420). The predetermined model is, for example, a model of a predetermined vehicle manufacturer when the service provider 9 has an exclusive contract with the predetermined vehicle manufacturer.

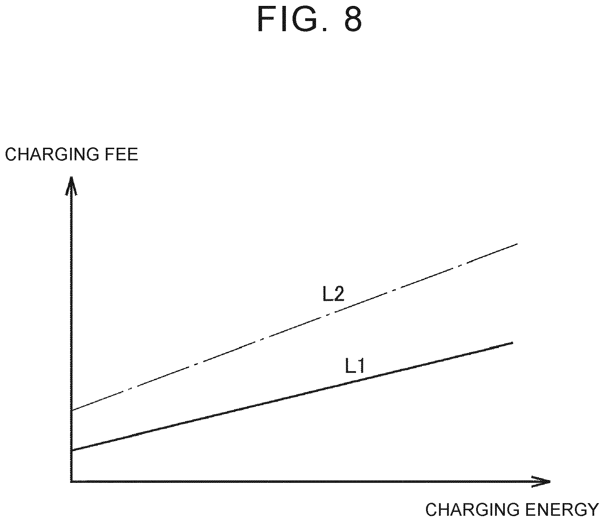

When the server 2 determines that the model of the vehicle to be charged is the predetermined model (Yes in S420), the server 2 uses a first fee model (S430). FIG. 8 is a graph schematically showing the first fee model. The abscissa represents charging energy (or charging time), and the ordinate represents charging fee.

A normal charge fee L1 is a charging fee to be charged when the vehicle is charged with the normal charging unit 30. A fast charge fee L2 is a charging fee to be charged when the vehicle is charged with the fast charging unit 31.

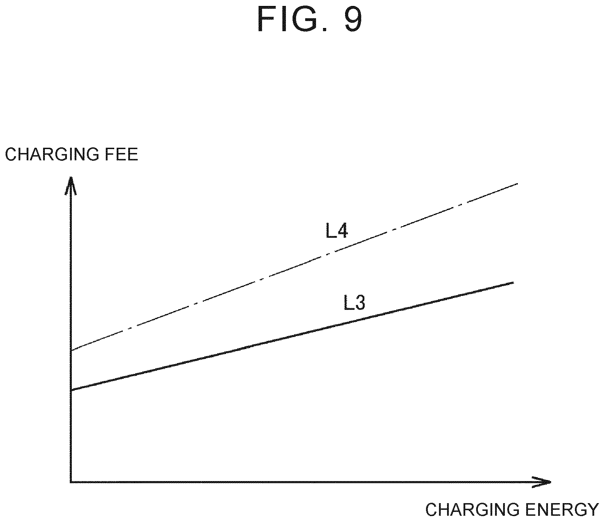

When the server 2 determines that the model of the vehicle to be charged is not the predetermined model (No in S420), the server 2 uses a second fee model (S440). FIG. 9 is a graph schematically showing the second fee model. The abscissa represents charging energy (or charging time), and the ordinate represents charging fee. A normal charge fee L3 is a charging fee to be charged when the vehicle is charged with the normal charging unit 30. A fast charge fee L4 is a charging fee to be charged when the vehicle is charged with the fast charging unit 31.

The normal charge fees L1, L3 are set so that the normal charge fee L3 is higher than the normal charge fee L1, and the fast charge fees L2, L4 are set so that the fast charge fee L4 is higher than the fast charge fee L2.

The server 2 then confirms the fee setting (S450). Specifically, the server 2 confirms a fee based on the rental fee confirmed in S400 and the charging fee confirmed in S415, S440, or S430.

Since the user 6 is a user of the vehicle subscription service, the rental fee of the rental vehicles 8 is set to zero or a small amount. The charging fee is also a fixed amount.

Since the user 6A is not a user of the vehicle subscription service, the server 2 sets the rental fee for each rental vehicle 8 to be proposed to the user 6A, based on the rental vehicles 8 to be proposed to the user 6A that have been confirmed in S255 and the rental vehicle usage time. The first fee model or the second fee model is set for the charging fee.

Referring back to FIG. 6, when the fee is confirmed, the server 2 sends a response signal (S290). This response signal includes the vehicles to be proposed as rental vehicles 8 and fee information. In the case where the user wants to charge a vehicle, the response signal includes the information identifying the selected charging unit and the usage time of the selected charging unit.

Referring back to FIG. 5, the server 2 sends a response signal RS1 to the user terminal 15 (S120), and the server 2 sends a response signal RS2 to the user terminal 15A (S121).

When the user terminal 15 receives the response signal RS1, the user 6 can check the vehicles proposed as the rental vehicles 8 and the fee details that are included in the response signal RS 1.

The user 6 enters various kinds of information to the user terminal 15 (S130).
On the input form displayed on the display unit 60 of the user terminal 15, the user 6 selects a vehicle he or she is going to use from the vehicles proposed as the rental vehicles 8, and presses a confirm button.

When the confirm button is pressed, the server 2 receives a request signal RQ3. The request signal RQ3 includes information indicating the rental vehicle 8 selected by the user 6.

When the server 2 receives the request signal RQ3, the server 2 sends a response signal RS3 to the user terminal 15 (S140). The response signal RS3 includes a password PW1 to be entered to the receiving terminal 4 and fee information. The server 2 updates various kinds of information in the storage unit 12. For example, regarding the rental vehicle 8 selected by the user 6, the server 2 updates the rental period information LTD and the rental user information LUD in the rental vehicle information LCD. In the case where the user wants to charge a vehicle, the server 2 updates the available time information D11 of the charging unit selected in S270.

When the server 2 receives the request signal RQ3, the server 2 sends a reservation signal RI1 to the receiving terminal 4 (S150). The reservation signal RI1 includes information identifying the rental vehicle 8 selected by the user 6 (e.g., rental vehicle 8A), the usage time of the rental vehicle 8, information indicating the password PW1, and fee information.

In the case where the user 6 wants to charge a vehicle, the reservation signal RI1 further includes information identifying the charging unit selected in S270 (e.g., normal charging unit 30), and information indicating the usage time of the charging unit.

When the user terminal 15A receives the response signal RS2, the user 6A can check the vehicles proposed as the rental vehicles 8 and the fee details that are included in the response signal RS2.

The user 6A enters various kinds of information to the user terminal 15A (S 131). On an input form displayed on the display unit 60 of the user terminal 15A, the user 6A selects a vehicle he or she is going to use from the vehicles proposed as the rental vehicles 8, and presses a confirm button.

When the confirm button is pressed, the server 2 receives a request signal RQ4. The request signal RQ4 includes information indicating the rental vehicle 8 selected by the user 6A (e.g., rental vehicle 8B).

When the server 2 receives the request signal RQ4, the server 2 sends a response signal RS4 to the user terminal 15A (S141). The response signal RS4 includes a password PW2 to be entered to the receiving terminal 4 and fee information. The server 2 updates various kinds of information in the storage unit 12.

When the server 2 receives the request signal RQ4, the server 2 sends a reservation signal RI2 to the receiving terminal 4 (S151). The reservation signal RI2 includes information identifying the rental vehicle 8 selected by the user 6A (e.g., rental vehicle 8B), the usage time of the rental vehicle 8, information indicating the password PW2, and fee information. In the case where the user 6A wants to charge a vehicle, the reservation signal RI2 further includes information identifying the charging unit selected in S270 (e.g., fast charging unit 31), and information indicating the usage time of the charging unit.

Referring back to FIG. 1, when it gets closer to the rental start time of the rental vehicle 8A, the user 6 gets on the battery electric vehicle 7 and drives to the store point P5.

The user 6 then operates the display unit 20 of the receiving terminal 4 to enter the password PW1. The receiving terminal 4 checks the password entered to the display unit 20 against the information indicating the password PW1 in the reservation signal RI1 received in advance from the server 2. When the control unit 21 determines the entered password and the password PW1 in the reservation signal RI1 match, the control unit 21 requests a fee payment when it is necessary to receive the fee. The control unit 21 then drives the key pickup unit 23, and the user 6 picks up the vehicle key of the rental vehicle 8A identified by the reservation signal RI1 from the key pickup unit 23.

The user 6 can thus receive the vehicle key of the rental vehicle 8A from the key pickup unit 23 and use the rental vehicle 8A parked on the premises of the service provider 9. The user 6 can drive to, for example, the destination entered in S100.

The service provider 9 charges the battery electric vehicle 7 with the charging unit specified by the reservation signal RI1 (e.g., normal charging unit 30) within the usage time specified by the reservation signal RI1.

The energy storage device 40 of the battery electric vehicle 7 will have been charged when the user 6 returns to the store point P5 after, for example, running errands at a destination point P3. Therefore, the user 6 can immediately use the charged battery electric vehicle 7.

It is preferable that the energy storage device 40 be in a fully charged state or have a relatively high SOC when the user 6 picks up the battery electric vehicle 7. Therefore, the charging time is set in S270 so that the SOC of the energy storage device 40 becomes 100% (fully charged). The charging time is set so that the battery electric vehicle 7 will have been charged to the extent that it can make a round trip between the departure point P1 and the store point P5 at least when the user 6 picks up the battery electric vehicle 7.

The user 6A can also have similar convenience. Unlike the user 6, the user 6A is not a user of the vehicle subscription service. Therefore, the fee for the user 6A is higher than that for the user 6. In the above example, the vehicle is charged before the user goes to the destination point P3 etc. However, the present disclosure is not limited to this example. The present disclosure is also applicable to the case where the user stops by at the store point P5 on the way back from the destination point P2 or P3 to the departure point P1, P1A to charge the vehicle and then returns to the departure point P1, P1A with a rental vehicle 8. For example, this happens when there is no charging facility at the departure point P1, P1A or when a vehicle cannot be reliably charged at the departure points P1, P1A (e.g., an apartment). In this case, for the next trip, the user stops by at the store point P5 and departs from the store point P5 with the battery electric vehicle the user is using under contract for the vehicle subscription service.

The embodiment disclosed herein should be considered to be illustrative and not restrictive in all respects. The scope of the present disclosure is shown by the scope of claims, and is intended to include all modifications within the meaning and scope equivalent to the scope of claims.

## Claims

1. A proposal system (1) comprising a processor, the processor being configured to propose, to a user (6; 6A) of a battery electric vehicle (7; 7A), a rental vehicle (8) the user is able to use during charging of an energy storage device mounted on the battery electric vehicle in order to allow the user to use the battery electric vehicle in a charged state in which the energy storage device has been charged.

2. The proposal system (1) according to claim 1, wherein the processor is configured to propose the rental vehicle (8) based on information on a point to which the user (6; 6A) is going during the charging.

3. The proposal system (1) according to claim 1 or 2, wherein the processor is configured to propose the rental vehicle (8) based on user-related information on the user (6; 6A).

4. The proposal system (1) according to claim 3, wherein:
the battery electric vehicle (7; 7A) is a vehicle the user (6; 6A) is able to use in a vehicle usage service that is available in exchange for a payment of a predetermined fee;
the user-related information includes contract information of the user in the vehicle usage service; and
the processor is configured to propose the rental vehicle (8) to the user based on the contract information of the user.

5. The proposal system (1) according to claim 3, wherein:
the rental vehicle (8) includes a plurality of vehicles of different grades;
contract information of the user (6; 6A) includes rental grade information that defines a grade range of a vehicle to be rented to the user; and
the processor is configured to propose the rental vehicle to the user based on the rental grade information.

6. The proposal system (1) according to any one of claims 1 to 5, further comprising:
charging equipment (3), the charging equipment including a normal charging unit (30) configured to charge the energy storage device with first charging power, and a fast charging unit (31) configured to charge the energy storage device with second charging power higher than the first charging power; and
a user interface configured to be operated by the user (6; 6A), wherein the processor is configured to propose the normal charging unit or the fast charging unit as a charging unit for charging the battery electric vehicle (7; 7A), based on input information entered to the user interface by the user.

7. The proposal system (1) according to claim 6, wherein the input information includes model information of the battery electric vehicle (7; 7A), a state of charge of the energy storage device, information on a point to which the user (6; 6A) is going during the charging, and user-related information on the user.

8. The proposal system (1) according to claim 6 or 7, wherein:
the processor is configured to set a charging fee for charging the energy storage device using the charging equipment (3); and
the processor is configured to calculate the charging fee in such a way that a charging fee for charging with the fast charging unit (31) is higher than a charging fee for charging with the normal charging unit (30).

9. The proposal system (1) according to any one of claims 1 to 8, wherein:
the energy storage device is charged at least in a period during which the user (6; 6A) uses the rental vehicle (8); and
the charged state is a state in which a state of charge of the energy storage device is a predetermined value or more.

10. The proposal system (1) according to any one of claims 6 to 8, wherein:
the user interface is a mobile terminal (15, 15A); and
the processor is mounted on a server (2) configured to communicate with the mobile terminal.
